# EUROPEAN PATENT APPLICATION

(11) **EP 4 645 259 A1**
(43) Date of publication of application: **05.11.2025**
(21) Application number: 24173231.2
(22) Date of filing: 30.04.2024
(51) Int. Cl.: G06V 20/56, G06V 20/58

(54) **IN-VEHICLE PERCEPTION PERFORMANCE EVALUATION**

(71) Applicant: Zenseact AB, 417 56 Göteborg (SE)
(72) Inventor: FATEMI DEZFOULI, Maryam, 417 61 Göteborg (SE); ALI, Mohammad, 445 34 Bohus (SE)
(74) Representative: Zacco Sweden AB

(57) **Abstract**

A a computer-implemented method for monitoring a performance of an object perception system of an automated driving system of a vehicle and related aspects are disclosed. The object perception system is configured to ingest sensor data samples generated by one or more vehicle-mounted sensors out of a plurality of vehicle-mounted sensors and to output object perception data indicative of one or more detected objects in a surrounding environment of the vehicle and of one or more attributes of the detected objects. The method comprises outputting reference data indicative of one or more detected objects in the surrounding environment of the vehicle and of one or more attributes of the detected objects based on sensor data samples generated by one or more vehicle-mounted sensors out of the plurality of vehicle-mounted sensors. The method further comprises comparing the object perception data with the reference data and assigning one or more confidence values to the object perception data based on the comparison. The method further comprises controlling the vehicle, the object perception system, and/or one or more downstream ADS functions configured to ingest the object perception data, based on the assigned one or more confidence values.

## Description

### TECHNICAL FIELD

The disclosed technology relates to performance evaluation of perception performance of autonomous and semi-autonomous vehicles. In particular, but not exclusively, the disclosed technology relates to methods and other related aspects for monitoring a performance of an object perception system of an automated driving system of a vehicle.

### BACKGROUND

During these last few years, the development of autonomous vehicles has exploded and many different solutions are being explored. An increasing number of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. Today, development is ongoing in both ADAS as well as Autonomous Driving (AD), within a number of different technical areas within these fields. ADAS and AD will herein be referred to under the common term Automated Driving System (ADS) corresponding to all of the different levels of automation as for example defined by the SAE J3016 levels (0 - 5) of driving automation.

Accordingly, in a not too distant future, ADS solutions will to a greater extent find their way into modern vehicles. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles and/or relevant signage.

Vehicle perception systems play an important role in ADS in order to ensure reliable and safe vehicle operation. Perception systems can in the present context be understood as systems responsible for acquiring raw sensor data from on-vehicle sensors such as cameras, LIDAR, and RADAR, and converting this raw data into scene understanding for the vehicle. Furthermore, perception systems generally include one or more sensor fusion systems (e.g., object perception modules) that are configured to process multiple types of sensor outputs with the aim of providing a more complete perception output and consequently, a better understanding of the surrounding environment. The output from a sensor fusion system is generally consumed by various "downstream" ADS functions responsible for control or operation of the vehicle. Therefore, it is important to be able to have sensor fusion systems that are capable of providing a reliable and accurate scene understanding of the surrounding environment of the vehicle, since the quality of the information provided by the sensor fusion modules affects the vehicle's perception capability significantly, and in extension the performance and safety of various downstream ADS functions.

Accordingly, there is still a need in the art for methods and systems capable of monitoring the reliability of the performance of the ADS's perception functionalities and in extension, the overall performance and safety of the ADS.

### SUMMARY

The herein disclosed technology seeks to mitigate, alleviate or eliminate one or more of the above-identified deficiencies and disadvantages in the prior art to address various problems relating to performance monitoring of perception functionalities of an automated driving system (ADS).

Various aspects and embodiments of the disclosed technology are defined below and in the accompanying independent and dependent claims.

A first aspect of the disclosed technology comprises a computer-implemented method for monitoring a performance of an object perception system of an automated driving system of a vehicle. The object perception system is configured to ingest sensor data samples generated by one or more vehicle-mounted sensors out of a plurality of vehicle-mounted sensors and to output object perception data indicative of one or more detected objects in a surrounding environment of the vehicle and of one or more attributes of the detected objects. The method comprises outputting reference data indicative of one or more detected objects in the surrounding environment of the vehicle and of one or more attributes of the detected objects based on sensor data samples generated by one or more vehicle-mounted sensors out of the plurality of vehicle-mounted sensors. The method further comprises comparing the object perception data with the reference data and assigning one or more confidence values to the object perception data based on the comparison. The method further comprises controlling the vehicle, the object perception system, and/or one or more downstream ADS functions configured to ingest the object perception data, based on the assigned one or more confidence values.

A second aspect of the disclosed technology comprises a computer program product comprising instructions which, when the program is executed by a computing device of a vehicle, causes the computing device to carry out the method according to any one of the embodiments disclosed herein. With this aspect of the disclosed technology, similar advantages and preferred features are present as in the previously discussed aspects.

A third aspect of the disclosed technology comprises a (non-transitory) computer-readable storage medium comprising instructions which, when executed by a computing device of a vehicle, causes the computing device to carry out the method according to any one of the embodiments disclosed herein. With this aspect of the disclosed technology, similar advantages and preferred features are present as in the previously discussed aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises an apparatus for monitoring a performance of an object perception system of an automated driving system of a vehicle. The object perception system is configured to ingest sensor data samples generated by one or more vehicle-mounted sensors out of a plurality of vehicle-mounted sensors and to output object perception data indicative of one or more detected objects in a surrounding environment of the vehicle and of one or more attributes of the detected objects. The apparatus comprises at least one processor and at least one memory including program code, the at least one memory and the program code configured to, with the processor, cause the apparatus to at least output reference data indicative of one or more detected objects in the surrounding environment of the vehicle and of one or more attributes of the detected objects based on sensor data samples generated by one or more vehicle-mounted sensors out of the plurality of vehicle-mounted sensors. The at least one memory and the program code are further configured to, with the processor, cause the apparatus to compare the object perception data with the reference data and assign one or more confidence values to the object perception data based on the comparison. The at least one memory and the program code are further configured to, with the processor, cause the apparatus to control the vehicle, the object perception system, and/or one or more downstream ADS functions configured to ingest the object perception data, based on the assigned one or more confidence values. With this aspect of the disclosed technology, similar advantages and preferred features are present as in the previously discussed aspects.

A fifth aspect of the disclosed technology comprises a vehicle comprising a plurality of sensor and an automated driving system including an object perception system configured to ingest sensor data samples generated by one or more sensors out of the plurality of sensors and to output object perception data indicative of one or more detected objects in a surrounding environment of the vehicle and of one or more attributes of the detected objects. The vehicle further comprises an apparatus comprising at least one processor and at least one memory including program code, the at least one memory and the program code configured to, with the processor, cause the apparatus to at least output reference data indicative of one or more detected objects in the surrounding environment of the vehicle and of one or more attributes of the detected objects based on sensor data samples generated by one or more vehicle-mounted sensors out of the plurality of vehicle-mounted sensors. The at least one memory and the program code are further configured to, with the processor, cause the apparatus to compare the object perception data with the reference data and assign one or more confidence values to the object perception data based on the comparison. The at least one memory and the program code are further configured to, with the processor, cause the apparatus to control the vehicle, the object perception system, and/or one or more downstream ADS functions configured to ingest the object perception data, based on the assigned one or more confidence values. With this aspect of the disclosed technology, similar advantages and preferred features are present as in the previously discussed aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is the operational safety of automated driving systems that utilize perception functions may be improved.

An advantage of some embodiments is that the performance of object perception systems of an automated driving system may be monitored in real time and that appropriate measures in case of failure can be taken in order to ensure safe operation of the vehicle.

An advantage of some embodiments is that performance validation of object perception systems of an automated driving system is enabled in a simple and efficient manner.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for monitoring a performance of an object perception system of an ADS of a vehicle in accordance with some embodiments.
Fig. 2 is a schematic block diagram representation of an apparatus for monitoring a performance of an object perception system of an ADS of a vehicle in accordance with some embodiments.
Fig. 3 is a schematic block diagram representation of an apparatus for monitoring a performance of an object perception system of an ADS of a vehicle in accordance with some embodiments.
Fig. 4 is a schematic block diagram representation of an apparatus for monitoring a performance of an object perception system of an ADS of a vehicle in accordance with some embodiments.
Fig. 5 is a schematic block diagram representation of a confidence estimator configured to monitor and evaluate a performance of an object perception system of an ADS of a vehicle in accordance with some embodiments.
Fig. 6 is a schematic illustration of two confidence validators configured to validate a performance of confidence estimators in accordance with some embodiments.
Fig. 7 is a schematic illustration of a vehicle comprising an apparatus for monitoring a performance of an object perception system of an ADS of a vehicle in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

As mentioned in the foregoing, various "downstream" ADS functions, such as path/trajectory planning functions, cruise control functions, autopilot functions, collision avoidance functions, localization functions, and so forth, often rely on the output from various sensor fusion functions, such as object perception functions, of the perception system of the ADS. Therefore, these downstream ADS functions are dependent on the quality of the information provided by these object perception functions or systems.

Moreover, it is advantageous to provide some means to quantify or otherwise derive the reliability or quality of the output from the object perception system in order to adapt the functionality of the ADS downstream functions accordingly. More specifically, it would be desirable to have a continuous evaluation of the performance of the object perception system in order to appropriately control the vehicle or the ADS in order to either perform some emergency action (e.g., bring the vehicle to a stop), hand over the driving task to a driver of the vehicle, or switch to consume the output of a redundant object perception system if such a redundancy exists within the ADS.

To this end, some embodiments herein propose methods and systems for monitoring a performance of an object perception system of an ADS of a vehicle. In more detail, it is herein proposed to add a functionality to the ADS in the form of a "performance evaluator" that includes a "reference tracker" configured to receive sensor data samples as an input and output reference data that will act as a reference for an evaluation of the output from the object perception system. For example, if the object perception system is configured to output a list of detected objects in the surrounding environment of the vehicle and one or more properties/attributes of those objects - then the reference tracker is configured to output a list of detected objects in the surrounding environment of the vehicle and one or more properties/attributes of those objects. The herein proposed method and apparatus can be executed in run-time, meaning that it is performed by one or more processors of the vehicle during operation of the vehicle.

The comparison between the output from the object perception system ("object perception data") and the reference data is used to assign one or more confidence values to the object perception data. The confidence values may include "per-object" confidence values and/or "per-zone" confidence values. Then, one can use these confidence values that have been assigned to the object perception data as an indication whether or not the downstream functions of the ADS can rely on the object perception data and take appropriate measures so to ensure safe operation of the vehicle. For example, if the object perception system isn't performing at a sufficient level then one can turn off the object perception system, one can degrade (i.e., limit the functionality), turn off, or inhibit activation of the downstream functions of the ADS, or one can control the vehicle so to for example perform a Minimum Risk Condition (MRC) manoeuvre.

The reference tracker operates independently from the object perception system. Moreover, the output from the reference tracker (i.e., the reference data) is not consumed or otherwise used by any downstream functions of the ADS. Therefore, the reference tracker can be operated at a lower frequency (reduced computational footprint) and it can be allowed to use sensor data samples from a wider time horizon than the object detection system (increased accuracy) whose output needs to be provided more expeditiously to the downstream functions. In other words, the "reference tracker" may be in the form of a non-causal system or component that is independent from the object perception system. Moreover, the "reference tracker" may utilize one or more smoothing algorithms to produce the reference data (i.e., estimation of surrounding objects). By utilizing smoothing algorithms, the reference tracker can account for historical detections and optionally even future detections in the final reference output.

### Definitions

As used herein, the term "if" may be construed to mean "when or "upon" or "in an instance of" or "in response to" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context. Accordingly, the phrase "if X equals Y" may be construed as "when X equals Y", "when it is determined that X equals Y", "in response to X being equal to Y", or "in response to detecting/determining that X equals Y" depending on the context.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" is used herein as an umbrella term encompassing both ADAS and AD.

An "object perception system" may in the present context be understood as a system, component, or computational model comprising sophisticated set of technologies and algorithms designed to detect, classify, and/or track various objects in the vehicle's surrounding environment. The object perception system may also be referred to as an "object tracker", "object detector", or "object classifier". These objects can include vehicles, pedestrians, cyclists, obstacles, road signs, and lane markings. The object perception system relies on a combination of sensors such as cameras, LiDAR (Light Detection and Ranging), radar, and sometimes ultrasonic sensors to gather data about the surroundings in real-time. Once the data is collected, advanced computer vision or machine learning algorithms may be employed to analyse and interpret it, identifying relevant objects and their characteristics such as size, shape, speed, and distance from the vehicle. As mentioned, one goal of the object perception system is to provide accurate and reliable information to the downstream components of the ADS, enabling them to make informed decisions regarding navigation, trajectory planning, and collision avoidance. By accurately perceiving and understanding the surrounding environment, the object perception system plays a crucial role in ensuring the safety and efficiency of autonomous or semi-autonomous vehicles. The output from the object perception system is herein denoted as "object perception data".

The term "reference data" refers to a dataset suitable to act as a "ground truth" for the object perception data that is output from the object perception system. In other words, the reference data serves as a benchmark or reference against which the output of the object perception system is compared to assess its accuracy and reliability. The function or component that is configured to generate and output the reference data is herein generally denoted as "reference tracker", and the reference tracker may be understood as a system, component, or computational model comprising a sophisticated set of technologies and algorithms designed to detect, classify, and/or track various objects in the vehicle's surrounding environment. The reference data is provided separately and independently from the object perception data. In more detail, the "reference tracker" operates independently from the object perception system and is thereby agnostic to the implementation of the object perception system.

The reference data may include information such as the positions and attributes of objects like vehicles, pedestrians, cyclists, and other relevant elements in the environment. The reference data may also encompass details about road infrastructure, lane markings, traffic signs, and other contextual information. By comparing the output of the object perception system with the reference data, one can evaluate the performance of the object perception system's capabilities. Any discrepancies between the perceived objects and their attributes (as output by the object perception system) and the reference data can be analysed to ensure that the ADS is operating safely. In summary, the reference data serves as a tool for evaluating the performance of the object perception system within an ADS by providing a standard against which its outputs are measured and assessed. In some embodiments, the "reference tracker" may be in the form of a non-causal (acausal) system, component or computational model that is independent from the object perception system. A system that has some dependence on input values from the future (in addition to possible dependence on past or current input values) is termed a non-causal or acausal system. Moreover, the "reference tracker" may utilize smoothing algorithms to produce the reference data (i.e., estimation of surrounding objects).

The term "confidence value" may in the present context be understood as a numerical measure that indicates the level of certainty or belief in the accuracy of a perception output. In more detail, when the object perception system perceives and interprets the surrounding environment using sensors and algorithms, it generates various "perception outputs" or "perception output parameters" such as e.g., the detection and classification of objects, estimation of their positions and velocities, and identification of road markings and signs. Each of these outputs is then assigned a confidence value in view of the corresponding output from the reference tracker (i.e., in view of the reference data). In short, the confidence value reflects the confidence in the accuracy of that particular perception, such as the confidence in a particular object detection, the confidence in a particular object classification, the confidence in a particular object attribute, and so forth.

These confidence values are accordingly used for evaluating the reliability of the object perception data provided by the object perception system. By analysing the confidence values associated with each perception output, one can make informed decisions about the performance of the object perception system. Outputs with higher confidence values are more likely to be accurate and reliable, while those with lower confidence values may indicate that the outputs are not reliable to be acted upon. In some embodiments, the confidence values may comprise "per-object confidence values" and "per-zone confidence values" where the "per-object confidence values" indicate the confidence on a per-object level while the "per-zone confidence values" indicate the confidence on a per-zone level. For example, a higher per-object confidence value for a particular object in the object perception data indicates a higher certainty of that object being correctly detected or otherwise represented in the object perception data. Similarly, a higher per-zone confidence value indicates a higher certainty of the object perception system being able to correctly detect or otherwise represent object in a particular zone or area in the surrounding environment of the vehicle. Analogously, if a particular zone is assigned a lower per-zone confidence value it may be due to missed object detections within that zone, erroneous object detections within that zone, and/or false positive object detections within that zone.

The confidence values may be in the form of percentage values going from 0% to 100%, where 100% indicates the highest confidence. Thus, in the evaluation one may assign a 100% confidence value if a perception output (e.g., an object detection) of the object perception data perfectly matches with the corresponding perception output of the reference data. For example, if the object perception data indicates a detected pedestrian at location x1, y1, z1 and the reference data indicates the same detected pedestrian at location x1, y1, z1, this detected object of the object perception data may be assigned a higher confidence value. However, other numeral representations are analogously feasible.

The term "estimation error" may be understood as a numerical measure of the difference between a perception output (e.g., object detection) of the object perception data and the corresponding perception output of the reference data. Thus, the calculated "estimation errors" for a particular parameter of the object perception data may be used to derive a confidence value for that particular parameter using a suitable equation. Moreover, the estimation errors may be aggregated over time to determine the confidence value using a sliding window approach and using general techniques such as Mean Squared Error (MSE) or Root Mean Square Error (RMSE). Thereby, reducing the risk of an instantaneous and transient error in the object perception output having an unreasonably large and harmful impact on the assigned confidence value.

In some embodiments, a confidence value may be determined based on a comparison between associated estimation error and one or more threshold values. For example, a threshold value for an estimation error may be chosen to reflect an acceptable/tolerable error value for a certain variable/parameter. Then a higher confidence value may be assigned to that estimation of the certain variable/parameter if the estimation error or aggregated error is below the threshold. Moreover, if the aggregated estimation errors are assumed to have a Gaussian distribution one may use standard deviations for setting thresholds and assign confidence values accordingly (e.g., if an aggregated estimation error falls outside x standard deviations of the distribution, one assigns a low confidence value - where x is 1, 2, or 3). More specifically, if the aggregated estimation error falls within 1 standard deviation of the distribution a 99% confidence value may be assigned, if the aggregated estimation error falls within 2 standard deviations but outside of 1 standard deviation of the distribution a 95% confidence value may be assigned, if the aggregated estimation error falls within 3 standard deviations but outside of 2 standard deviations of the distribution a 90% confidence value may be assigned. It should be noted that the confidence values in relation to standard deviations are merely examples, and as the skilled person readily realizes other values may be used depending on specific circumstances and applications.

In the present context, a "machine learning algorithm" refers to a computational model or set of techniques that are used to enable a computer to solve a task, such as for example, the vehicle's perception system to interpret and understand the surrounding environment. Perception tasks in ADS involve the vehicle's ability to detect and recognize objects, obstacles, road signs, lane markings, pedestrians, other vehicles, and various environmental conditions. The ADS may use machine learning algorithms to process sensor data, such as data from cameras, lidar, radar, and other sensors, to make informed decisions about how to navigate safely. These algorithms use data-driven techniques to analyse and classify objects, understand the road geometry, predict the movement of other road users, and/or assess potential risks in real-time. Common types of machine learning algorithms used in ADS perception tasks include deep neural networks, convolutional neural networks (CNNs) (e.g., for camera image processing, lidar output processing, etc.), recurrent neural networks (RNNs) (e.g., for sequence data), and various other techniques like support vector machines (SVM) and decision trees. Other common computational models that could be used in ADS perception tasks include Kalman filters.

The machine-learning algorithms (may also be referred to as machine-learning models, neural networks, and so forth) are implemented in some embodiments using publicly available suitable software development machine learning code elements, for example, such as those which are available in Pytorch, Keras and TensorFlow or in any other suitable software development platform, in any manner known to be suitable to someone of ordinary skill in the art.

In the present context, a (vehicle-mounted) "sensor or "sensor device" refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar (Radio Detection and Ranging), Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

The term "sensor data sample" may be understood as a single instance or snapshot of data collected by a sensor installed on the vehicle. A sensor data sample typically includes information such as sensor type (e.g., camera, Lidar, and radar), timestamp, raw sensor data (e.g., the raw measurements or readings captured by the sensor, such as pixel values in the case of cameras, point cloud data for LiDAR, or reflected signals for radar), and metadata (e.g., as sensor calibration parameters, sensor orientation, or environmental conditions at the time of data collection). Thus, each sensor data sample provides a glimpse into the vehicle's surroundings at a particular moment in time, contributing to the overall perception of the environment by the automated driving system. By processing and analysing multiple sensor data samples over time, a perception system can build a comprehensive understanding of the dynamic and static environment and make informed decisions about vehicle control, navigation, and interaction with other road users.

### Example embodiments

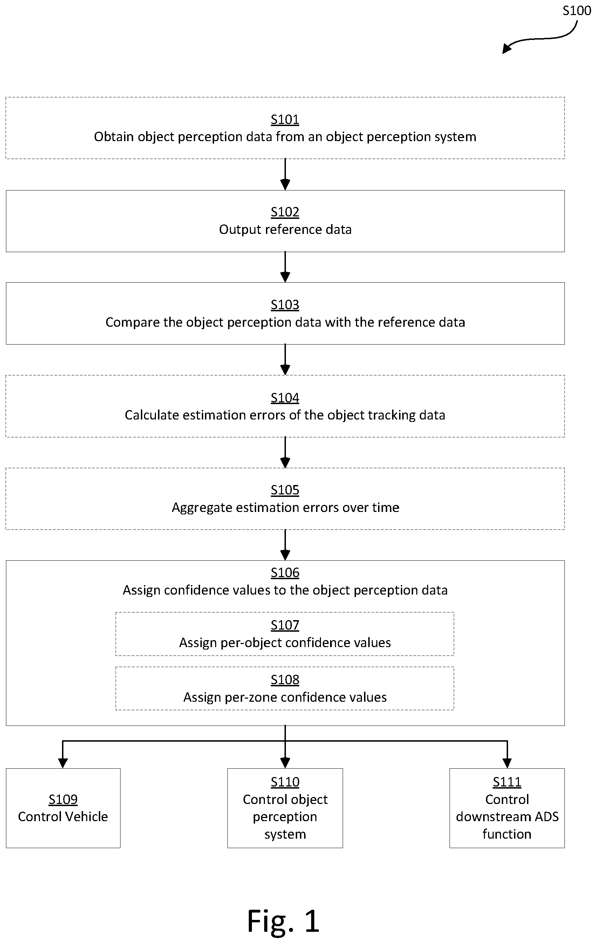

Fig. 1 is a schematic flowchart representation of a method S100 for monitoring a performance of an object perception system of an automated driving system of a vehicle. Here, the object perception system is configured to ingest sensor data samples (i.e., utilize sensor data samples as input) generated by one or more vehicle-mounted sensors out of a plurality of vehicle-mounted sensors and to output object perception data indicative of one or more detected objects in a surrounding environment of the vehicle and of one or more attributes of the detected objects. The method S100 is preferably a computer-implemented method S100, performed by a processing system of the ADS-equipped vehicle. The processing system may for example comprise one or more processors and one or more memories coupled to the one or more processors, wherein the one or more memories store one or more programs that perform the steps, services and functions of the method S100 disclosed herein when executed by the one or more processors.

In some embodiments, the method S100 comprises obtaining S101 object perception data from the object perception system. The object perception system may accordingly receive sensor data samples as an input, process the sensor data samples, and output the object perception data comprising one or more detected objects in a surrounding environment of the vehicle and of one or more attributes of the detected objects. The object perception data may be in the form of a list of the detected object and their corresponding attributes (e.g., classification, position, speed, etc.). The object perception system may be configured to apply one or more machine learning algorithms to the sensor data samples in order to generate the object perception data.

Further, the method S100 comprises outputting S102 reference data indicative of one or more detected objects in the surrounding environment of the vehicle and of one or more attributes of the detected objects based on sensor data samples generated by one or more vehicle-mounted sensors out of the plurality of vehicle-mounted sensors. As mentioned, the reference data refers to a dataset suitable to act as a "ground truth" for the object perception data. Preferably, the reference data and the object perception data pertain to the same moment in time, meaning that the detected objects and their attributes comprised in each dataset reflect the objects and their attributes in the surrounding environment of the vehicle at the same moment in time. In the present context "a moment in time" refers to a very brief time period, i.e., a time period including one or a few consecutive "time instances" or "points in time".

However, the object detection data and the reference data may be based on sensor data samples generated during different, albeit overlapping, time periods. Preferably, the reference data is based on sensor data samples generated over a longer time period than the sensor data samples upon which the object perception data is based. Accordingly, in some embodiments, the object perception system is configured to output the object perception data pertaining to a specific moment in time based on sensor data samples captured during a first time period, and the output S102 reference data pertains to the (same) specific moment in time based on sensor data samples captured during a second time period. Here, the first time period is shorter than the second time period. By having the reference data being based on sensor data samples over a longer period of time, the accuracy or precision of the reference data may be improved. Moreover, since the reference data is not used by any downstream ADS functions, the reference data can be output at a lower frequency as compared to the object perception data. In other words, in some embodiments, the object perception data is output at a first frequency (e.g., 24-48 Hz) and the reference data is output at a second frequency (e.g., -below 20 Hz) lower than the first frequency.

In some embodiments, the first time period encompasses a time prior to the specific moment in time until and including the specific moment in time, and the second time period encompasses a time prior to the specific moment in time and a time after the specific moment in time. In other words, since the object perception system needs to provide its output to the downstream ADS functions in real time it only has access to sensor data samples up to and including the "detection time". However, the "reference tracker" that is providing the reference data (may also be referred to as a "reference smoother") may have access to both past and future sensor data samples. Moreover, since the latency requirements for the reference data are lower, the reference data need not necessarily be generated in the vehicle, but may for example be generated by offboard the vehicle using a so-called cloud service where sensor data samples are transmitted from the vehicle to a remote server that processes the sensor data samples and transmits the reference data to the vehicle. This is however under the assumption that sufficient communication capabilities are available in terms of latency and bandwidth requirements.

Moreover, in some embodiments the object perception data and the reference data are based on sensor data samples generated by the same one or more vehicle-mounted sensors. However, in some embodiments, the object perception data and the reference data are based on sensor data samples generated by different vehicle-mounted sensors. It should be noted that the sensor sets providing input to the object perception system and the reference tracker need not be completely different. In some embodiments, the object perception data may be based on sensor data samples generated by a first set of sensors (e.g., sensors A, B, and C) while the reference data may be based on sensor data samples generated by a second set of sensors (e.g., sensor C, D, and F). In other words, the first and second sensor sets may be different but overlapping. Moreover, in some embodiments, the sensors feeding the object perception system and the reference tracker may be completely different. For example, the object perception data may be based on sensor data samples generated by sensors A and B while the reference data may be based on sensor data samples generated by sensors C and D.

The method S100 further comprises comparing S103 the object perception data with the reference data. In more detail, the comparison S103 may be construed as an evaluation of the accuracy or reliability of the object perception data in view of the reference data, which is used as a type of ground truth. In more detail, the comparison S102 is made with respect to the same moments in time, meaning that object perception data pertaining to time instance tN is compared with reference data pertaining to (substantially) the same time instance tN. Thus, the object perception data and the reference data may comprise metadata including timestamps - the comparison S102 accordingly accounts for the timestamps of each dataset in order to ensure that the datasets (object perception data and reference data) pertaining to the same moment in time are compared.

It should be noted that it need not necessarily be exactly the same time instance, but a margin, for example, 10-200ms, may be applied. Thus, in reference to the comparison S103 of datasets pertaining to the same time instance, one can construe the term "the same time instance" as "substantially the same time instance". Thus, if the object perception data is associated with a time stamp tM, the selected reference data for comparison S103 may be the reference data associated with a time stamp within the range of tM +/- 200 ms, tM +/-100 ms, tM +/- 50 ms, and so forth. If there are multiple reference data outputs within the specified range, one may select the reference data with a time stamp that is closest to tM. This is because the operational/running frequencies of the of the object perception system and the reference tracker may differ, wherefore it is not certain that they will always provide an output at exactly the same time instance. However, as the operational frequencies are suitably higher than 10 Hz, the potential offset in time has limited negative impact as the scenes around the vehicle are not expected to change so rapidly. In other words, a scene around the vehicle at time tM is not expected to result in completely different detections as compared to the scene at time tM + 100ms. Moreover, in some embodiments the operational/running frequency of the object perception system is a multiple of the operational/running frequency of the reference tracker. In other words, the operational/running frequency of the reference tracker may be denoted as F while the operational/running frequency of the object perception system may be denoted as XF where X is a positive integer larger than 1. By having the the operational/running frequency of the object perception system as an integer multiple of the operational/running frequency of the reference tracker, their outputs will be synchronized so the object perception system provides an output for every time instant that the reference tracker provides an output.

As readily understood, the comparison S103 does not have to be performed in real time with respect to the object perception data, but can be performed with a delay in order to provide the reference tracker with sufficient time to generate the reference data. For example, if the object perception system outputs object perception data (for a scene at time t1) at time t1 based on sensor data samples ranging from t0 to t1 and the reference tracker outputs reference data (for a scene at time t1) at time t2 based on sensor data samples ranging from t0 to t2, the comparison S103 may be made at time t2 or later, here t2>t1>t0.

Further, the method S100 may comprise calculating S104 one or more estimation errors of the object perception data based on the comparison S103. As mentioned, an estimation error may be understood as a numerical measure of the difference between a parameter (e.g., object detection, object position, object class, object speed, object dimensions, etc.) of the object perception data and the corresponding parameter of the reference data. The method S100 may further comprise aggregating S105 the calculated estimation errors over time. In some embodiments, the calculation S104 of estimation errors and the aggregation S105 of the estimation errors may be "sub-processes" of the comparison process S103.

The method S100 further comprises assigning S106 one or more confidence values to the object perception data based on the comparison S103. As mentioned, a confidence value may be understood as a numerical measure that indicates the level of certainty or belief in the accuracy of an object perception data. Similar to the reference data generation, the comparison S103 and assignment S106 of confidence values need not necessarily be performed in the vehicle, but may be performed utilizing a cloud service by for example transmitting the object perception data and the reference data to a remote server that performs the comparison and assigns the confidence values to the object perception data.

Furthermore, the assigned S106 one or more confidence values may be based on the aggregated S105 estimation errors. Thus, rather than relying on one sample of the two perception outputs for the estimation of the confidence value, one can aggregate the potential errors over time and then determine a confidence value based on these aggregated errors. By utilizing the aggregated S105 estimation errors for computing the confidence values one obtains a smoother and more robust evaluation of the performance of the object perception system since transient/instantaneous errors (e.g., an error in a single data sample) does not immediately result in a conclusion that the object perception data is inaccurate.

In some embodiments, the object perception data is assigned S106 one confidence value per output sample. In other words, all the detections in one particular output sample affect an overall confidence value. However, in some embodiments, the assigning S106 of one or more confidence values comprises assigning S107 one or more per-object confidence values and assigning S108 one or more per-zone confidence values. Here, the one or more per-object confidence values indicative of a confidence level of the one more detected objects of the object perception data, where a higher confidence level of a detected object indicates a higher likelihood that the detection is correct. The one or more per-zone confidence values indicative of a confidence level of each zone of a plurality of zones within the surrounding environment of the vehicle, where a higher confidence level of a zone indicates a higher likelihood that the object perception data pertaining to that zone is correct.

Further, the method S100 comprises controlling S109 the vehicle, controlling S110 the object perception system, and/or controlling Sill one or more downstream ADS functions configured to ingest the object perception data (i.e., utilize the object perception data as input), based on the assigned S106 one or more confidence values.

The controlling of the vehicle S109 based on the assigned S106 one or more confidence values may for example comprise, in an instance where the assigned S106 one or more confidence values indicate that the object perception data is unreliable, executing a Minimum Risk Control (MRC) manoeuvre (e.g., bringing the vehicle to a halt), handing over responsibility of the driving task to a driver of the vehicle, limiting an allowable speed of the vehicle, or the like. However, in an instance where the assigned S106 one or more confidence values indicate that the object perception data is reliable, the controlling S109 of the vehicle may comprise allowing the vehicle to execute a current path or trajectory, increasing an allowable speed of the vehicle, or the like.

To derive whether the perception output is to be deemed reliable or unreliable, the method S100 may for example comprise comparing the assigned one or more confidence values to one or more set thresholds. For example, if the one or more of the assigned S106 confidence values are below some corresponding thresholds, the perception output data may be deemed as unreliable.

The controlling S110 of the object perception system based on the assigned S106 one or more confidence values may for example comprise, in an instance where the assigned S106 one or more confidence values indicate that the object perception data is unreliable, limiting a functionality of the object perception system, instructing the object perception system to include one or more flags in the object perception data, deactivating the object perception system, inhibiting activation of the object perception system, or the like. In reference to the limiting of functionality of the object perception system, this may for example include instructing the object perception system to restrict lane assignment of objects in specific zones or areas, in particular if those zones or areas are associated with a low per-zone confidence score. The restriction of lane assignments may be understood as that the positional estimation of an object within that zone is not on a "lane level" but coarser, such as on a "road level". However, in an instance where the assigned S106 one or more confidence values indicate that the object perception data is reliable, the controlling S110 of the object perception system may for example comprise, allowing activation of the object perception system, activating the object perception system, increasing a functionality of the object perception system, or the like.

The controlling Sill of the downstream ADS function(s) based on the assigned S106 one or more confidence values may for example comprise, in an instance where the assigned S106 one or more confidence values indicate that the object perception data is unreliable, limiting a functionality of the ADS function(s), deactivating the ADS function(s), inhibiting activation of the ADS function(s), or the like. The limitation of a functionality of an ADS function may be different for different ADS functions - for example a path or trajectory planning function may be limited so to only allow or plan for a limited speed of the vehicle or to increase distances to surrounding objects in the planning of paths or trajectories. However, in an instance where the assigned S106 one or more confidence values indicate that the object perception data is reliable, the controlling Sill of the downstream ADS function(s) may for example comprise, allowing activation of the ADS function(s), activating the ADS function(s), increasing a functionality of the ADS function(s).

In some embodiments, the steps of controlling S109 the vehicle, controlling S110 the object perception system, and/or controlling Sill one or more downstream ADS functions may be replaced with transmitting the assigned one or more confidence values. The one or more confidence values may be transmitted to a control unit of the vehicle, to the object perception system, and/or to the one or more downstream ADS functions. In some realizations, the individual units/entities (control unit, object perception system, downstream ADS functions) may be configured to take appropriate measures themselves based on the assigned one or more confidence values.

Executable instructions for performing these functions are, optionally, included in a non-transitory computer-readable storage medium or other computer program product configured for execution by one or more processors.

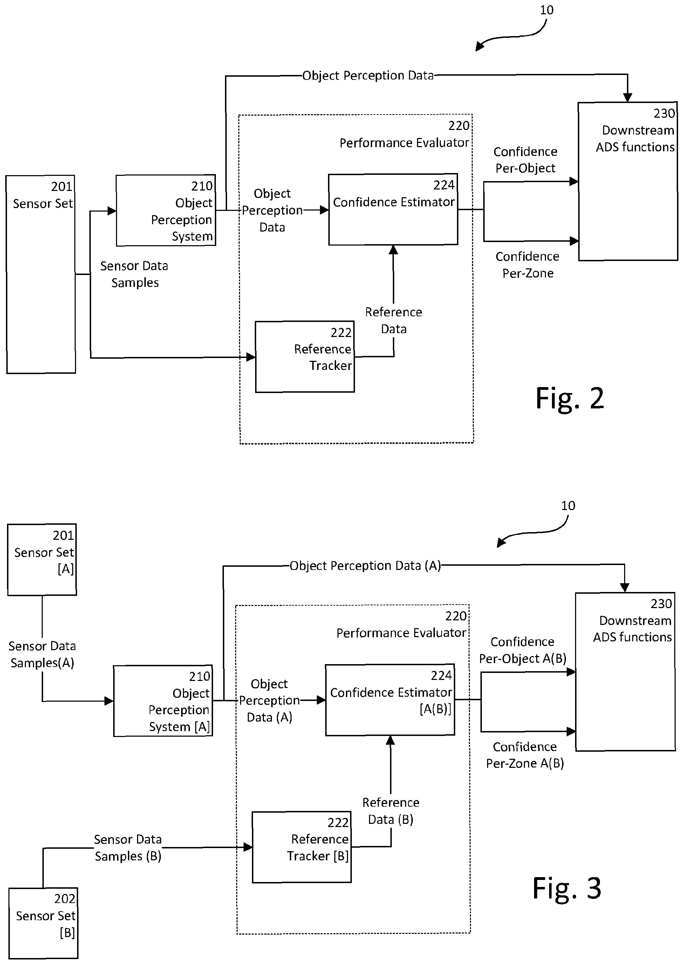

Figs. 2 and 3 are schematic block diagram representations of an apparatus 10 for monitoring a performance of an object perception system 210 of an automated driving system of a vehicle in accordance with some embodiments. The apparatus 10 comprises control circuitry (e.g. one or more processors) configured to perform the functions of the method S100 disclosed herein, where the functions may be included in a non-transitory computer-readable storage medium 12 or other computer program product configured for execution by the control circuitry 11. In other words, the apparatus 10 comprises one or more memory storage areas 12 comprising program code, the one or more memory storage areas 12 and the program code configured to, with the one or more processors 11, cause the apparatus 10 to perform the method S100 according to any one of the embodiments disclosed herein. However, in order to better elucidate the herein disclosed embodiments, the control circuitry is represented as various "modules" or "blocks" in Figs. 2-6, each of them linked to one or more specific functions of the control circuitry.

The following discussion will be with respect to both Fig. 2 and Fig. 3 as they only differ in the inputs to the object perception system 210 and to the reference tracker 222. In Fig. 2, the object perception system 210 and the reference tracker 222 are both fed with sensor data samples from the same sensor set 201, while in Fig. 3 the object perception system 210 and the reference tracker 222 are fed by different sensor sets 201, 202 denoted as "Sensor set [A]" and "Sensor set [B]", respectively.

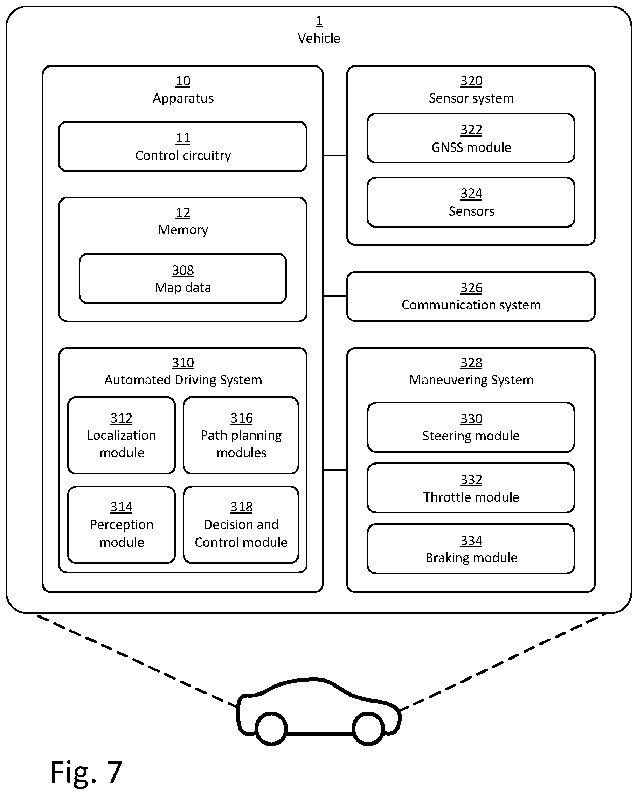

Accordingly, the object perception system 210 is configured to ingest sensor data samples generated by one or more vehicle mounted sensors 201 out of a plurality of vehicle-mounted sensors and to output object perception data indicative of one or more detected objects in a surrounding environment of the vehicle and of one or more attributes of the detected objects. The object perception system 210 may for example be a sub-module or function of the general perception system (314 in Fig. 7) of the ADS. Further, the apparatus 10 has a performance evaluator module 220, which is a module or component configured to assess the performance of the object perception system 210. The performance evaluator 220 in turn comprises a reference tracker 222 and a confidence estimator 224.

The reference tracker 222 is configured to output reference data indicative of one or more detected objects in the surrounding environment of the vehicle and of one or more attributes of the detected objects based on sensor data samples generated by the set of sensors 201, 202. As mentioned, in Fig. 2 the reference tracker 222 utilizes the same sensor set as the object perception system, while in Fig. 3 the reference tracker 222 utilizes a different sensor set. An advantage of using separate sensor sets is that the risk of propagating errors in the object perception data that originate from the sensors 201 into the reference data is reduced.

Moving on, while the object perception system 210 needs to report objects in real time and only has access to historical sensor data samples up to and including the detection time, the reference tracker 222 (which can also be called reference smoother) can on the other hand use both past and future detections, consider longer time horizons and use smoothing algorithms to produce estimations of the surrounding objects. The reference tracker 222 may run on a lower frequency than the real-time tracker. The reference tracker 222 may also run online in the vehicle.

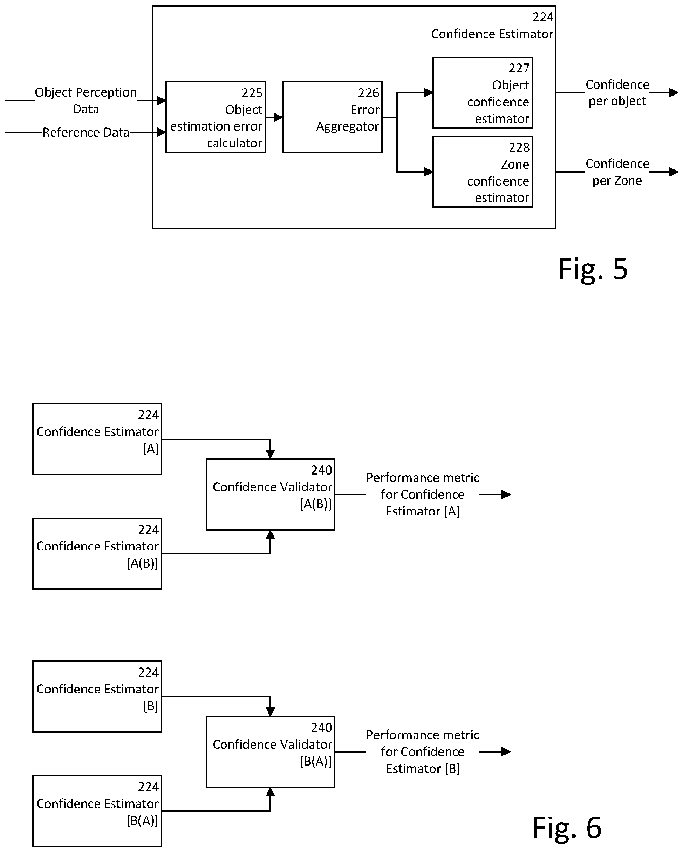

The confidence estimator 224 is configured to compare the output from the object perception system 210 and the reference tracker 222 and assigns one or more confidence values to the object perception data. In more detail, the confidence estimator 224 may be configured to calculate errors and statistical properties that may be used to calculate the confidence values. The statistical properties may for example include average error calculations over a set time window, mean calculations, or suitable statistical distributions. The confidence estimator module 224 is depicted in more detail in Fig. 5 in accordance with some embodiments.

In some embodiments, the confidence estimator 224 is configured to assign per-object confidence values by comparing estimated states of objects at time tN within the object perception data with the estimates states of objects of objects at time tN within the reference data. The confidence estimator 224 may be further configured to calculate and aggregate estimation errors of the estimated states of objects within the object perception data based these comparisons. The per-object confidence values may then be assigned based on the aggregated estimation errors. In some embodiments, a per-object confidence value is decreased if the aggregated estimation error is consistently below some threshold over several samples. The process is schematically illustrated in Fig. 5, where the object perception data and the reference data are provided to an object estimation error calculator 225 that outputs the estimation errors on a per-object level to an error aggregator 226. The error aggregator 226 in turn provides the aggregated estimation errors to an object confidence estimator 227 that outputs the per-object confidence values and to a zone confidence estimator 228 that outputs the per-zone confidence values.

Moreover, the confidence estimator 224 may be configured to maintain a representation, e.g., in the form of a grid or polygons, that describe areas or zones in the surrounding environment of the vehicle that are associated with a per-zone confidence value. According, the per-zone confidence value can indicate a low or high confidence with respect to whether performance is low for object state estimations within a particular zone, whether objects reported by the reference tracker 222 are not reported by the object perception system 210 in a specific zone (false negatives), and/or whether objects reported by the object perception system 210 are not reported by the reference tracker 222 in a specific zone (false positives).

By maintaining a representation describing areas or zones around the vehicle the confidence estimator 224 may output high confidence and low confidence areas around the vehicle to be used as an input for decisions to be made by the downstream ADS functions 230. For example, the downstream ADS functions 230 may utilize the fact that certain areas around the vehicle are associated with a high object perception reliability and allow smaller safety margins for operations/manoeuvres in those areas in order to improve comfort, and increase the safety margins the areas associated with low confidence values in order to improve safety.

Moreover, the border between high and low confidence areas (zones) may change according to different factors affecting the performance of the object perception system 210. For example, in good weather and good lighting conditions, the high confidence areas are expected to be relatively large and in adverse weather or poor light conditions the high confidence areas are expected to be relatively small.

Further, the performance evaluator 220 outputs the assigned one or more confidence values in order to appropriately control the vehicle, the object perception system 210, and/or one or more downstream ADS functions 230. In some embodiments, the assigned one or more confidence values may be transmitted to the downstream ADS functions 230 whereupon the downstream ADS functions can take appropriate actions. For example, one may consider restricting lane assignments of objects that are outside of the high-confidence zones or areas where lane assignments cannot be made with sufficient confidence. This may result in adapting a speed reduction of the ego-vehicle so that the vehicle does not or only performs a limited speed reduction in view of objects until they enter the high-confidence zone or area. One may also consider limiting the speed of the ego-vehicle in general.

Furthermore, in some embodiments, the output from the performance evaluator 220 can be used to generate statistics that are used to calculate Key Performance Indicators (KPI) of the object perception system 210. The KPIs may be set in design-time and may for example relate to a number of false positives, false negatives, erroneous detections, or size of high-confidence and low-confidence areas over time. The KPIs may then be used to validate a performance of the object perception system 210. Thus, in some embodiments, instead of, or in addition to, using the performance evaluator 220 for performance monitoring by controlling the vehicle, the object perception system, and/or the downstream ADS functions 230 based on the assigned confidence values, one may instead track one or more KPIs of the object perception system and transmit the tracked one or more KPIs to a remote server for offline processing. In other words, one can use the output from the performance evaluator 220 to assess the performance of the object perception system 210 in real-time in the vehicle (short time-window monitoring) and/or one can use the output from the performance evaluator 220 to validate the object perception system 210 by combining the data from an entire fleet of vehicles implementing the herein disclosed technology (long time-window monitoring).

For example, a KPI may be in the form of a size of the high-confidence zone. Then, one can monitor how often the size of the high-confidence zone is below some threshold where the output from the object perception system 210 is not useful for downstream ADS functions. This and other events in which KPIs exceed some threshold may be used as triggers to send event messages to a remote server (e.g., a data centre) or to trigger recordings (persistent storage) of relevant data (e.g., sensor data samples, object perception data, reference data, etc.) for some time before and after the event. The recordings may subsequently be uploaded to the remote server for post processing and further analysis.

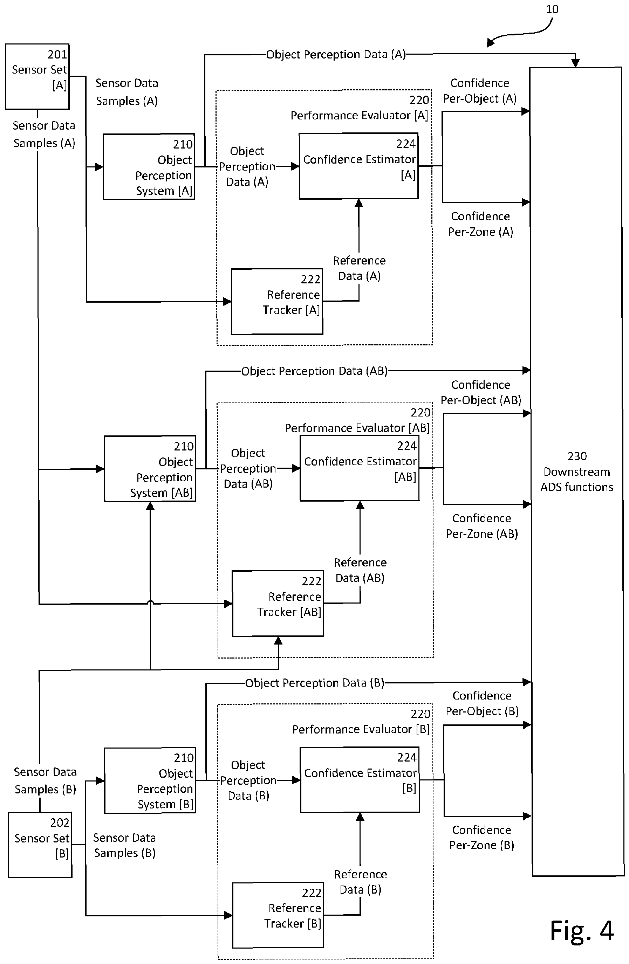

As the level of automation increases for the vehicle one expects that the requirements on performance and availability will increase. Moving on to Fig. 4, in some embodiments, the ADS may comprise multiple object perception systems 210, each relying on different "clusters" of sensors or different sensor sets. Moreover, each object perception system 210 may be associated with a corresponding performance evaluator 220. Accordingly, Fig. 4 shows a block diagram representation of an apparatus 10 in accordance with some embodiments. Here, a first sensor set 201 ("sensor set [A]") has been used to implement a first object perception system 210 ("object perception system [A]") with a corresponding performance evaluator 220 ("performance evaluator [A]"), a second sensor set 202 ("sensor set [B]") has been used to implement a second object perception system 210 ("object perception system [B]") with a corresponding performance evaluator 220 ("performance evaluator [B]"), and a superset of sensors ("sensor set [A]" + "sensor set [B]") has been used to implement a third object perception system 210 ("object perception system [AB]") with a corresponding performance evaluator 220 ("performance evaluator [AB]"). The general operation and functionality of each individual block is analogous to the one described in the foregoing with respect to Figs. 2 and 3 and will therefore not be repeated for reasons of brevity and conciseness.

By utilizing this cluster-approach depicted in Fig. 4, where multiple object perception systems 210 with corresponding performance evaluators 220 are provided, each of them relying on a different set of sensors several advantages in terms of reliability and performance are readily achievable. For example, one can instead consider the union of high-confidence zones/areas reported by each performance evaluator 220 when controlling the vehicle or the downstream ADS functions. Similarly, one can consider the union of low-confidence areas reported by each performance evaluator 220 when controlling the vehicle or the downstream ADS functions. Moreover, a redundancy to the object perception functionality of ADS is increased as one could deactivate one of the sensor clusters 201, 202 and rely on the other one should the former be failing (e.g., as indicated by the confidence values output for that particular cluster).

Fig. 6 is a schematic block diagram representation of a pair of confidence validators 240 configured to validate a performance of two confidence estimators 224 in accordance with some embodiments. The setup in Fig. 6 illustrates another use-case when the ADS is provided with redundant object perception systems 210, and therefore has more than one confidence validator 240. In more detail, in a setup with multiple object perception systems 210 and multiple confidence estimators 224 one can design a setup where the confidence estimators 224 output is monitored and verified by a confidence validator 240.

In the top-most illustration of Fig. 6, the first confidence estimator 224 ("confidence estimator [A]") assess the output of an object perception system relying on a first sensor set ("sensor set [A]") in view of reference data that is based on the same sensor set. The second confidence estimator 224 ("confidence estimator [A(B)]") instead asses the output of the object perception system relying on the first sensor set ("sensor set [A]") in view of reference data that is based on a second sensor set ("sensor set [B]") that is different from the first sensor set. Accordingly, the confidence validator 240 ("confidence validator [A(B)"] is configured to compare the outputs of the first confidence estimator 224 ("confidence estimator [A]") and the second confidence estimator 224 ("confidence estimator [A(B)]") to assess the reliability of the first confidence estimator's 224 ("confidence estimator [A]") output. Accordingly, both of the confidence estimators 224 ("confidence estimator [A]" and "confidence estimator [A(B)]") are configured to assess the output from an object perception system relying on a first sensor set ("sensor set [A]"), however, the assessment is done in view of two different sets of reference data where one relies on the first sensor set and the other relies on a different sensor set. Thus, the confidence validator 240 ("confidence validator [A(B)"] acts as a sanity check for the first confidence estimator's 224 ("confidence estimator [A]") assessment of the object perception data.

Analogously, in the bottom-most illustration of Fig. 6, the same assessment is made, but where the feeds from the two sensor sets are switched. In more detail, here the object perception system relies on sensor data samples generated by the second sensor set ("sensor set [B]") and the two confidence estimators 224 either use reference data generated on the basis of sensor data samples generated by the second sensor set ("sensor set [B]") or reference data generated on the basis of sensor data samples generated by the first sensor set ("sensor set [A]") to assign confidence values to the object perception data. The output from the confidence validators 240 may for example be indicative of that the evaluated confidence estimators 224 ("confidence estimator [A]" and "confidence estimator [B]") are overestimating their confidence in their object state estimations or size of the high or low-confidence areas.

Fig. 7 is a schematic illustration of an ADS-equipped vehicle 1 comprising an apparatus 10 for monitoring a performance of an object perception system of an automated driving system of a vehicle. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the apparatus 10 may form a part of the ADS 310, i.e. the apparatus 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 7. Moreover, the vehicle 1 may comprise further elements than those shown in Fig. 7. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 7 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a computer, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

Accordingly, it should be understood that parts of the described solution may be implemented either in the vehicle 1, in a system located external the vehicle 1, or in a combination of internal and external the vehicle, for instance in a server in communication with the vehicle, a so-called cloud solution. For instance, reference data could be generated by a "cloud solution" where the sensor data samples are provided by the vehicle to the cloud that transmits the reference data to the vehicle. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various outputting, comparing, assigning, and controlling steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for monitoring a performance of an object perception system of an automated driving system of a vehicle, wherein the object perception system is configured to ingest sensor data samples generated by one or more vehicle-mounted sensors out of a plurality of vehicle-mounted sensors and to output object perception data indicative of one or more detected objects in a surrounding environment of the vehicle and of one or more attributes of the detected objects, the method comprising:
outputting (S102) reference data indicative of one or more detected objects in the surrounding environment of the vehicle and of one or more attributes of the detected objects based on sensor data samples generated by one or more vehicle-mounted sensors out of the plurality of vehicle-mounted sensors;
comparing (S103) the object perception data with the reference data;
assigning (S106) one or more confidence values to the object perception data based on the comparison;
controlling (S109, S110, S111) the vehicle, the object perception system, and/or one or more downstream ADS functions configured to ingest the object perception data, based on the assigned one or more confidence values.

2. The method (S100) according to claim 1, wherein the one or more confidence values comprises:
one or more per-object confidence values indicative of a confidence level of the one more detected objects of the object perception data, wherein a higher confidence level of a detected object indicates a higher likelihood that the detection is correct; and
one or more per-zone confidence values indicative of a confidence level of each zone of a plurality of zones within the surrounding environment of the vehicle, wherein a higher confidence level of a zone indicates a higher likelihood that the object perception data pertaining to that zone is correct.

3. The method (S100) according to claim 1 or 2, wherein the object perception data and the reference data are based on sensor data samples generated by the same one or more vehicle-mounted sensors.

4. The method (S100) according to claim 1 or 2, wherein the object perception data and the reference data are based on sensor data samples generated by different vehicle-mounted sensors.

5. The method (S100) according to any one of claims 1-4, further comprising:
calculating (S104) one or more estimation errors of the object perception data based on the comparison;
aggregating (S105) the calculated estimation errors over time; and
wherein the assigned (S106) one or more confidence values are based on the aggregated (S105) estimation errors.

6. The method (S100) according to any one of claims 1-5, wherein the object perception system is configured to output the object perception data pertaining to a specific moment in time based on sensor data samples captured during a first time period; and
wherein the output (S102) reference data pertains to the specific moment in time based on sensor data samples captured during a second time period, wherein the first time period is shorter than the second time period.

7. The method (S100) according to claim 6, wherein the first time period encompasses a time prior to the specific moment in time until and including the specific moment in time, and the second time period encompasses a time prior to the specific moment in time and a time after the specific moment in time.

8. The method (S100) according to any one of claims 1-7, wherein the object perception data is output at a first frequency and wherein the reference data is output at a second frequency lower than the first frequency.

9. A computer program product comprising instructions which, when the program is executed by a computing device, causes the computing device to carry out the method (S100) according to any one of claims 1-8.

10. A computer-readable storage medium comprising instructions which, when executed by a computing device, causes the computing device to carry out the method (S100) according to any one of claims 1-8.

11. An apparatus (10) for monitoring a performance of an object perception system (210) of an automated driving system (310) of a vehicle (1), wherein the object perception system is configured to ingest sensor data samples generated by one or more vehicle-mounted sensors (201, 202) out of a plurality of vehicle-mounted sensors and to output object perception data indicative of one or more detected objects in a surrounding environment of the vehicle (1) and of one or more attributes of the detected objects, the apparatus (10) comprising at least one processor (11) and at least one memory (12) including program code, the at least one memory and the program code configured to, with the processor, cause the apparatus to at least:
output reference data indicative of one or more detected objects in the surrounding environment of the vehicle (1) and of one or more attributes of the detected objects based on sensor data samples generated by one or more vehicle-mounted sensors (201, 202) out of the plurality of vehicle-mounted sensors;
compare the object perception data with the reference data;
assign one or more confidence values to the object perception data based on the comparison;
control the vehicle (1), the object perception system (210), and/or one or more downstream ADS functions (230) configured to ingest the object perception data, based on the assigned one or more confidence values.

12. The apparatus (10) according to claim 11, wherein the one or more confidence values comprises:
one or more per-object confidence values indicative of a confidence level of the one more detected objects of the object perception data, wherein a higher confidence level of a detected object indicates a higher likelihood that the detection is correct; and
one or more per-zone confidence values indicative of a confidence level of each zone of a plurality of zones within the surrounding environment of the vehicle, wherein a higher confidence level of a zone indicates a higher likelihood that the object perception data pertaining to that zone is correct.

13. The apparatus (10) according to claim 11 or 12, wherein the at least one memory (12) and the program code are further configured to, with the processor (11), cause the apparatus (10) to at least:
calculate one or more estimation errors of the object perception data based on the comparison;
aggregate the calculated estimation errors over time; and
wherein the assigned one or more confidence values are based on the aggregated estimation errors.

14. The apparatus (10) according to any one of claims 11-13, wherein the object perception system (210) is configured to output the object perception data pertaining to a specific moment in time based on sensor data samples captured during a first time period encompassing a time prior to the specific moment in time until and including the specific moment in time; and
wherein the output reference data pertains to the specific moment in time based on sensor data samples captured during a second time period encompasses a time prior to the specific moment in time and a time after the specific moment in time.

15. A vehicle (1) comprising:
a plurality of sensors (324);
an automated driving system (310) including an object perception system (210) configured to ingest sensor data samples generated by one or more sensors (201, 202) out of the plurality of sensors and to output object perception data indicative of one or more detected objects in a surrounding environment of the vehicle (1) and of one or more attributes of the detected objects;
an apparatus (10) comprising at least one processor (11) and at least one memory (12) including program code, the at least one memory and the program code configured to, with the processor, cause the apparatus (10) to at least:
output reference data indicative of one or more detected objects in the surrounding environment of the vehicle (1) and of one or more attributes of the detected objects based on sensor data samples generated by one or more sensors (201, 202) out of the plurality of sensors (324);
compare the object perception data with the reference data;
assign one or more confidence values to the object perception data based on the comparison;
control the vehicle (1), the object perception system (210), and/or one or more downstream ADS functions (230) configured to ingest the object perception data, based on the assigned one or more confidence values.
